# EUROPEAN PATENT APPLICATION

(11) **EP 2 431 780 A1**
(43) Date of publication of application: **21.03.2012**
(21) Application number: 10774693.5
(22) Date of filing: 30.04.2010
(51) Int. Cl.: G02B 7/28, G02B 7/08, G02B 7/36, G03B 13/36, H04N 5/232

(54) **CAMERA, PORTABLE TERMINAL DEVICE, AND LENS POSITION CONTROL METHOD**

(30) Priority: 11.05.2009 JP 2009114791
(71) Applicant: Panasonic Corporation, Kadoma-shi Osaka 571-8501 (JP)
(72) Inventor: KATSURASHIMA, Ken, Osaka-shi, Osaka 540-6207 (JP); MURAKAMI, Toshihiro, Osaka-shi, Osaka 540-6207 (JP)
(74) Representative: Grünecker, Kinkeldey, Stockmair & Schwanhäusser
(86) International application number: PCT/JP2010/003096
(87) International publication number: WO 2010/131433

(57) **Abstract**

When a lens position is assumed on the basis of a control result by an AF control, the accuracy of the assumption of the lens position can be improved. A camera resets the position of a lens to a reference position when the number of AF operations, the number of frames for captured images, or the time exceeds a threshold value after the commencement of a continuous AF operation (step ST14), Consequently, accumulated errors of the assumed positions of the lens assumed on the basis of a control amount of an AF control unit are reset, and thus, the assumption accuracy of the lens position can be enhanced.

## Description

### Technical Field

The present invention relates to a camera, such as a mobile telephone with a camera, a portable terminal apparatus, and a lens position control method.

### Background Art

A mobile telephone with a camera is known, in which the mobile telephone is provided with various multimedia functions and is used as a video phone for taking still images and moving images rather than just for phone calls. Because of a small size of the camera itself, an autofocus (hereinafter referred to as "AF") provided in a camera provided in the mobile telephone is required to have a small size and low cost.

Generally, an AF system is broadly categorized into an active system and a passive system. In the active system, an object is illuminated with infrared light or supersonic waves, and the distance is detected based on, for example, the time it takes until reflected waves return, and the illumination angle. In the passive system, a focus condition from an image is evaluated and then the lens is moved, and in this system, primarily, the lens position is controlled so as to maximize the contrast by using a component indicating the condition of contrast (sharpness) in the object as an evaluation value (AF evaluation value).

Here, in the active system, generally the configuration becomes complex, and therefore, in most cases, the passive system with a simple configuration is used in the camera provided in the mobile telephone with a camera.

In such type of a camera, AF is realized by moving the lens position. Thus, accurate positioning of the lens is important from the viewpoint of improving the performance of AF. Conventionally, a technology for correcting a position aberration of a lens is described in Patent Literature 1, for example. In Patent Literature 1, there is disclosed a technology in which the image information is checked after moving the lens, and then the lens is moved again if the focus is incomplete.

Furthermore, in recent years, a camera provided with an auto scene selection function has been proposed. The auto scene selection function is used to automatically set a scene mode, in which the camera selects the most appropriate scene mode from among scene modes such as "portrait scene mode," "macro scene mode," and "landscape scene mode" only by facing the lens towards an object. Thus, the user need not carefully set a scene mode in accordance with the shooting environment, and therefore, shooting becomes easy.

Here, to realize the auto scene selection function, generally, distance information of the object is used, and this distance information can be calculated based on the lens position (focus position).

However, in the case of a camera that is required to be of a small size such as a camera of a mobile telephone with a camera, in order to realize the small size, it may not be possible to provide a detection section that directly detects the lens position (for example, a hall element or the like), in some cases.

In such cases, it is necessary to estimate the lens position (focus position) based on the information (such as a control amount and control result) indicating the degree of lens movement by AF control, and then find out the distance information of an object based on the estimation result.

### Citation List

### Patent Literature

[PTL 1
   Japanese Patent Application Laid-Open No. 2007-271983

### Summary of Invention

### Technical Problem

However, when the lens position is estimated as described above, the estimated errors are accumulated, and as a result, the accuracy of auto scene selection declines.

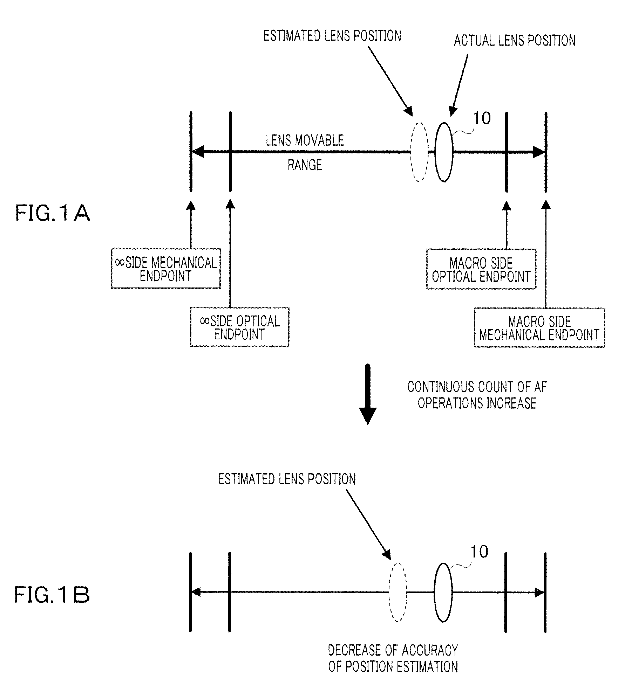

An error of an estimated lens position is briefly described below using FIG. 1. In FIG.1A, lens 10 can be moved between an infinite (∞) side mechanical endpoint and a macro side mechanical endpoint. Note that besides the infinite (∞) side mechanical endpoint and the macro side mechanical endpoint, an infinite (∞) side optical endpoint and a macro side optical endpoint, which are the adjustment points of lens 10, are set. Rather than physical endpoints, such as mechanical endpoints, these optical endpoints are the infinite side endpoint and the macro side endpoint of AF that are set in advance based on the focus position of AF.

As described above, lens 10 can be moved between the infinite side mechanical endpoint and the macro side mechanical endpoint, however, defocusing may occur in the vicinity of the infinite side mechanical endpoint and the vicinity of the macro side mechanical endpoint in many cases, when focusing is not achieved. Therefore, generally, during the AF control, lens 10 is moved between the infinite side optical endpoint and the macro side optical endpoint, which is a range that focusing is achievable.

As shown in FIG.1A, an error may occur between an actual lens position and an estimated lens position estimated based on a control amount (may also be referred to as control information or control result) by the AF control section. Particularly, in case where the focus position is set progressively by performing AF operations in continuation (hereinafter referred to as "continuous AF"), the errors are accumulated when the count of AF operations increases, and therefore, as shown in FIG.1B, the error between the actual lens position and the estimated lens position estimated based on the control amount by the AF control section increases resulting in a decline in the accuracy of estimation of the lens position, which is a problem.

It is therefore an object of the present invention to provide a camera, a portable terminal apparatus, and a lens position control method with improved accuracy of estimation of the lens position in cases where the lens position is estimated based on a control result by AF control and with improved accuracy of auto scene selection.

### Solution to Problem

An aspect of a camera of the present invention adopts a configuration in which the camera includes: an autofocus control section; a lens position estimation section that estimates the position of a lens based on a control result in the autofocus control section; and a lens drive section that moves the lens position to a reference position when the count of autofocus, time, or the number of captured frames becomes equal to or greater than a threshold value.

### Advantageous Effects of Invention

According to the present invention, it is possible to improve the accuracy of scene selection in scene selection of a camera and a portable terminal apparatus with a camera.

### Brief Description of Drawings

FIG.1A shows both a range in which the lens can be moved and an error of an estimated lens position, and FIG.1B shows the condition when the error increases after the count of continuous AF operations increases;
FIG.2 is a block diagram showing the configuration of a camera according to Embodiment 1;
FIG.3 is a flowchart providing a description of an operation of Embodiment 1;
FIG.4 shows an image of errors of the estimated lens position;
FIG.5 is a block diagram showing the configuration of a camera according to Embodiment 2;
FIG.6 shows a condition of a camera and a posture detection section provided in a mobile telephone;
FIG.7A shows a standard posture, FIG.7B shows a downward posture, and FIG.7C shows an upward posture;
FIG.8 is a flowchart providing a description of an operation of Embodiment 2;
FIG.9 is a block diagram showing the configuration of a camera according to Embodiment 3; and
FIG.10 is a flowchart providing a description of an operation of Embodiment 3.

### Description of Embodiments

Hereinafter, embodiments of the present invention will be described in detail with reference to drawings.

### [Embodiment 1]

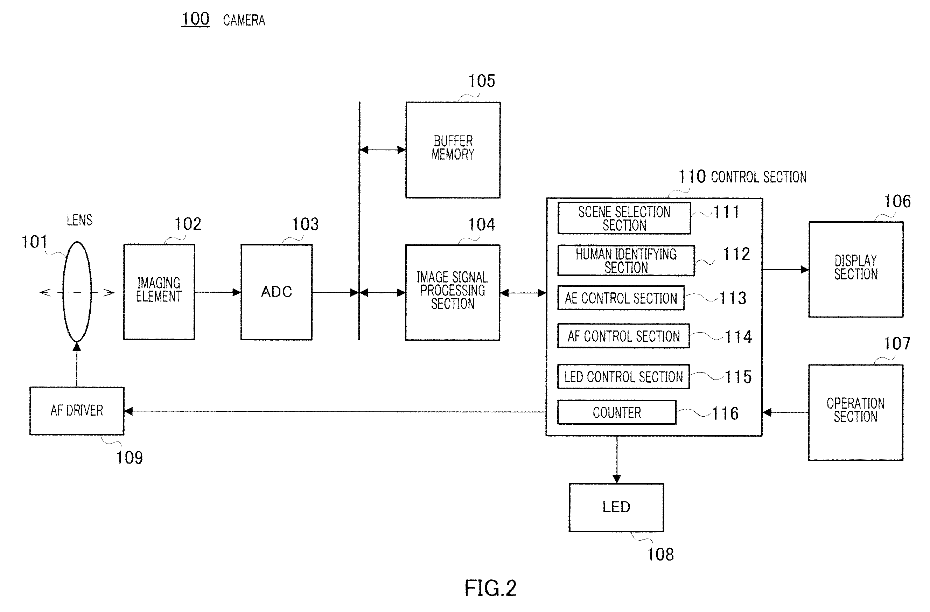

FIG.2 shows the essential configuration of a camera according to Embodiment 1 of the present invention. Camera 100, for example, is provided in a portable terminal apparatus, such as a mobile telephone, a PHS (Personal Handy-phone System), a PDA (Personal Digital Assistant: Portable Information Terminal), and a portable video game.

Camera 100 includes an AF function and an auto scene selection function. Furthermore, camera 100 uses the passive system to perform AF.

Camera 100 includes lens 101, imaging element 102, ADC (Analogue-to-Digital Converter) 103, image signal processing section 104, buffer memory 105, control section 110, display section 106, operation section 107, LED 108, and AF driver 109.

Lens 101 converges imaging light on imaging element 102, such as a CCD. Here, lens 101 moves in a direction of the optical axis of lens 101 shown by a dashed line in the figure, by AF driver 109. Thus, the focal point of the imaging light is focused on an imaging surface of imaging element 102.

AF driver 109 includes devices such as a piezo, a voice coil, and a stepping motor, and focuses the imaging light on the imaging surface of imaging element 102 by moving lens 101 between the infinite side mechanical endpoint and the macro side mechanical endpoint (or between the infinite side optical endpoint and the macro side optical endpoint during AF control), as shown in FIG.1A, upon receiving an instruction from control section 110.

An image signal output from imaging element 102 is input to image signal processing section 104 and buffer memory 105 via ADC 103.

Image signal processing section 104 executes image processing such as white balance control for the output signal of ADC 103 or for the image signals accumulated in buffer memory 105, and outputs the signal after image processing to control section 110.

Control section 110 is configured by a microcomputer or the like, and performs position control of lens 101 while performing overall control of camera 100. Furthermore, control section 110 is connected to display section 106 including an LCD or the like, and operation section 107.

Control section 110 includes scene selection section 111, human identifying section 112, AE (Auto Exposure) control section 113, AF control section 114, LED control section 115, and counter 116.

Human identifying section 112 determines whether or not there are people. AE control section 113 detects the object brightness information, and performs AE control according to the object brightness. Note that human identification and AE control are well-known technologies, and therefore, the detailed description is omitted.

AF control section 114 implements AF control by sending control signals to AF driver 109, Specifically, AF control section 114 moves lens 101 using AF driver 109 such that the contrast of the image signal from image signal processing section 104 becomes maximum. Furthermore, AF control section 114 estimates a position (focus position) of lens 101 based on a control amount (may also be referred to as a control result). Note that based on the estimated position of lens 101, object distance information indicating a distance up to the object can be acquired.

Here, if lens 101 is moved accurately by AF driver 109 by an amount corresponding to the control amount from AF control section 114, the actual position of lens 101 and the estimated position of lens 101 should match. However, if an error occurs between the control amount from AF control section 114 and the actual moved amount due to error in the accuracy of movement of lens 101, the position of lens 101 estimated based on the control amount deviates from the actual position of lens 101. In the present embodiment, because the AF control is performed by using a continuous AF system, as shown in FIG.1B, due to an increase in the count of AF operations, the errors between the position of lens 101 estimated based on the control amount and the actual position of lens 101 are accumulated, and the error becomes large.

Note that an estimation of the lens position based on the control amount by AF control section 114 may not only be performed by AF control section 114, but may also be performed by scene selection section 111, for example.

LED control section 115 forms the LED flash control information based on the object brightness information from AE control section 113, and controls LED 108 based on LED flash control information.

Based on the human information acquired from human identifying section 112, the object brightness information acquired from AE control section 113, the object distance information acquired from AF control section 114, and the LED flash control information acquired from LED control section 115, scene selection section 111 determines which is the currently shooting scene from among "portrait scene mode," "macro scene mode," and "landscape scene mode," for example. Scene selection section 111 outputs the scene information, which is the determination result, together with the image information to display section 106, and displays this information.

Counter 116 counts the count of AF operations, which is the number of times AF control has been performed, the number of captured image frames, or a time, after the start of a continuous AF operation.

When the count of AF operations, the number of captured image frames, or the time becomes equal to or greater than a predetermined threshold value, counter 116 reports the same to AF driver 109. When AF driver 109 receives this report, AF driver 109 moves the position of lens 101 to a reference position. Thus, the position of lens 101 is reset to a reference position.

This reference position is a mechanical endpoint shown in FIG.1. Furthermore, the reference position may even be an optical endpoint shown in FIG. 1. However, because the reference position is a position that acts as a physical reference, it is preferable to set a mechanical endpoint as a reference position.

Furthermore, when the above-mentioned count of AF operations, the number of captured image frames, or the time becomes equal to or greater than a predetermined threshold value, counter 116 reports the same to a circuit for estimating the position of lens 101 (AF control section 114 of the present embodiment). Thus, after resetting an estimated position of lens 101, the circuit for estimating the position of lens 101 keeps estimating the position of lens 101 by sequentially using a new control amount output again from AF control section 114.

Thus, when the count of AF operations, the number of captured image frames, or the time becomes equal to or greater than a predetermined threshold value after the start of a continuous AF operation, the position of lens 101 is reset to a reference position, and at the same time, the estimated lens position calculated is reset, following which the accumulated error of the estimated lens position can be reduced by estimating the position of lens 101 through the sequential use of a new control amount output from AF control section 114. As a result, the accuracy of estimation of the lens position improves, which leads to improved accuracy of auto scene selection.

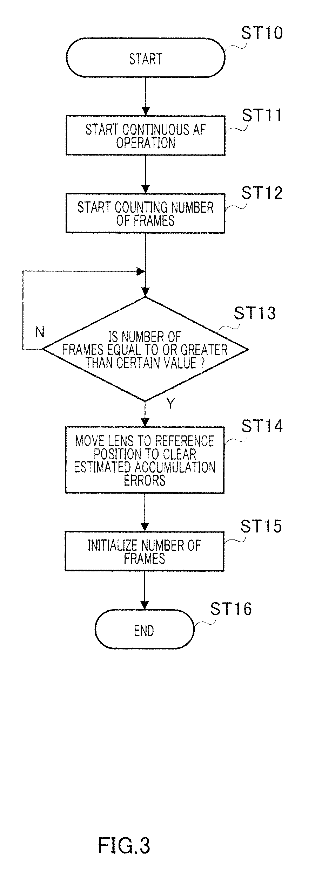

Next, an operation of the present embodiment is described by using FIG.3. Note that FIG.3 mainly shows an operation of moving lens 101 to a reference position when a predetermined condition is met during a continuous AF operation, which is a characteristic of the present embodiment.

If the processing starts in step ST 10 (that is, if camera 100 is started), camera 100 starts a continuous AF operation in the next step ST 11. An auto scene selection and object position estimation (lens position estimation) operation starts due to the start of the continuous AF operation.

In the next step ST 12, counting of the number of captured image frames by counter 116 starts. In step ST 13, it is determined whether or not the number of captured image frames counted by counter 116 matches or exceeds a certain value.

Thus, if the number of captured image frames matches or exceeds a certain value, the processing moves to step ST 14, and AF driver 109 moves lens 101 to the reference position. This operation of moving to the reference position may be performed in the same way as the operation performed during a general one-shot AF operation, or AF may be operated by the maximum amount such that the lens can be driven physically. Furthermore, camera 100 resets the estimated lens position calculated so far. Thus, the accumulated error of the estimated lens position is cleared.

Next, in step ST 15, the number of captured image frames counted by counter 116 is initialized (reset), and the processing is terminated in the next step ST 16. Thus, if the number of captured image frames after the start of a continuous AF operation matches or exceeds a certain value, camera 100 resets the position of lens 101 and the estimated position of lens 101.

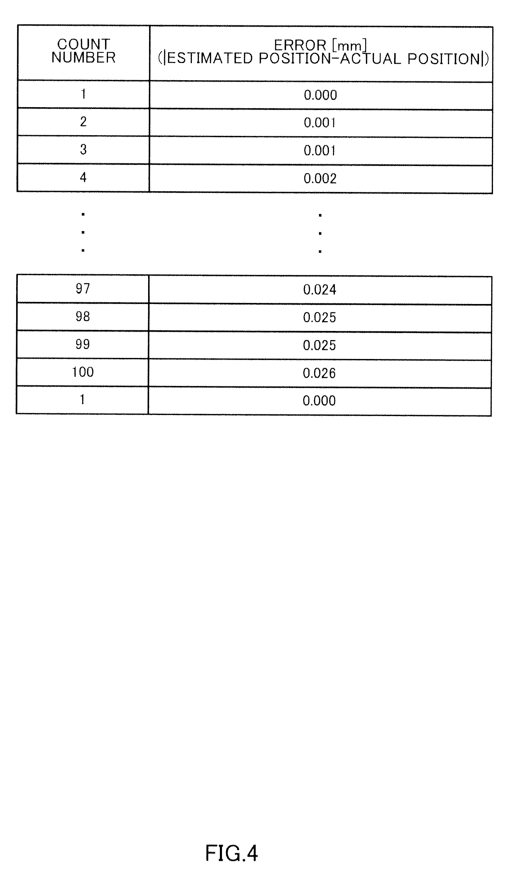

FIG.4 shows an image of errors of the estimated lens position. FIG.4 shows an example, in which when the number of captured image frames after the start of the continuous AF operation exceeds 100, the position of lens 101 is moved to the reference position. It is understood from the figure that as a result of an increase in the number of captured image frames after the continuous AF operation, an error, which is a difference between the estimated position and the actual position, increases, however, the accumulated error is cleared to zero by returning lens 101 to the reference position.

If the continuous AF operation is started again, camera 100 sequentially moves lens 101 from the reference position to perform a continuous AF operation, and as a result, the estimated position of lens 101 from the reference position is calculated sequentially based on the control amount of AF control section 114.

Note that in the example of FIG.3, the number of captured image frames after the start of the continuous AF operation is counted, and once the counted number of frames for captured images becomes equal to or greater than a certain value, the position of lens 101 and the estimated position of lens 101 are reset. However, as described above, instead of the number of captured image frames, if the count of AF operations or time after the start of the continuous operation matches or exceeds a certain value, the position of lens 101 and the estimated position of lens 101 may be reset.

As described above, according to the present embodiment, when the count of AF operations, the number of captured image frames, or the time after the start of the continuous AF operation is equal to or greater than a threshold value, the accumulated error of the estimated lens position estimated based on the control amount of AP control section 114 is reset by resetting the position of lens 101 to a reference position, and therefore, the accuracy of estimation of the lens position can be improved. As a result, the accuracy of auto scene selection can be improved.

Note that in the present embodiment, an example in which the count of AF operations, the number of captured image frames, or the time after the start of a continuous AF operation is equal to or greater than a threshold value is described, however, the present embodiment is not limited thereto, and for example, the position of lens 101 may be reset to a reference position when the count of AF operations, the number of captured image frames, or the time from the start of estimation of a distant position from a reference point is equal to or greater than a threshold value.

### [Embodiment 2]

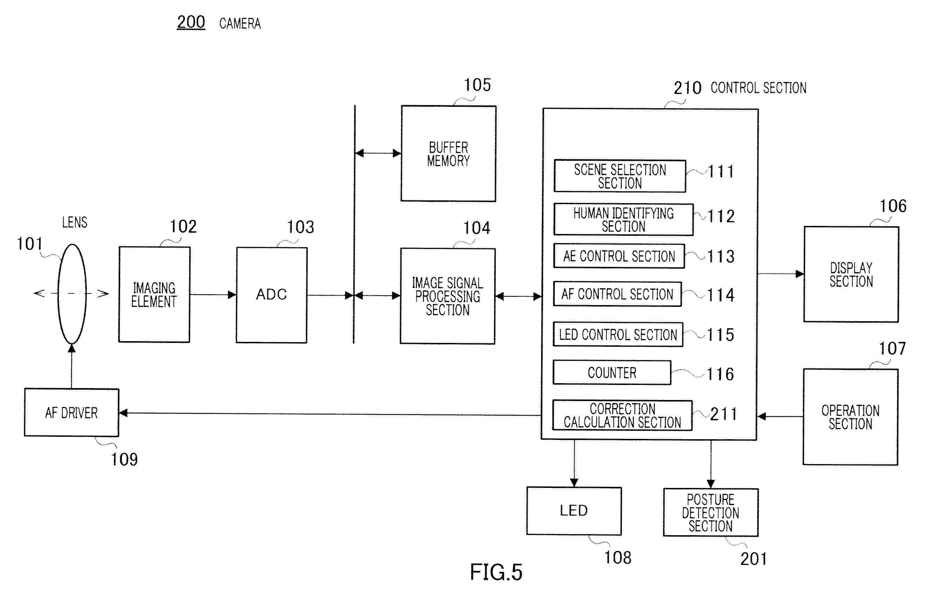

FIG.5, in which the parts corresponding to those in FIG.2 are denoted by the same reference numerals, shows the principle-part configuration of camera 200 of the present embodiment. In addition to the configuration of camera 100 (FIG.1), camera 200 of the present embodiment includes posture detection section 201 that detects the posture of camera 200, and correction calculation section 211 that corrects a count value of counter 116 based on the posture information acquired from posture detection section 201.

Camera 200 of the present embodiment corrects the count values of the count of AF operations, the number of captured image frames, or the time based on the posture information.

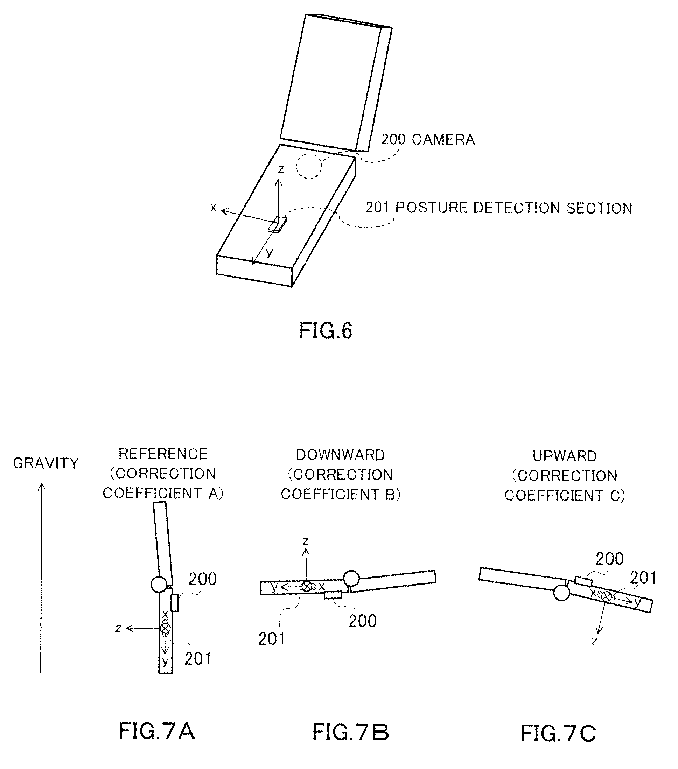

As shown in FIG.6, when providing camera 200 in a mobile telephone, posture detection section 201 may also be provided in the mobile telephone. Posture detection section 201 is an acceleration sensor, for example, which detects a difference in gravitational force that changes in accordance with a change in the posture of camera 200 (mobile telephone), and also detects the posture of camera 200 based on the difference in gravitational force.

For example, as shown in FIG.7, posture detection section 201 detects a plurality of postures, such as a standard posture (FIG.7A), a downward posture (FIG.7B), and an upward posture (FIG.7C). Correction calculation section 211 corrects a count value using a correction coefficient set in advance for each posture.

For example, the correction coefficient for the standard posture is set to 1.0, the correction coefficient for the downward posture is set to 1.05, and the correction coefficient for the upward posture is set to 1.10. In such a case, the count value after correction becomes 10 for the standard posture, 10.5 for a downward posture, and 11 for an upward posture, when the count value of counter 116 is 10.

By setting beforehand a high correction coefficient for a posture that is greatly affected by the gravitational force (that is, a posture more susceptible to error), lens 101 is quickly reset to a reference position for the posture that is greatly affected, and an increase in accumulated error can be prevented.

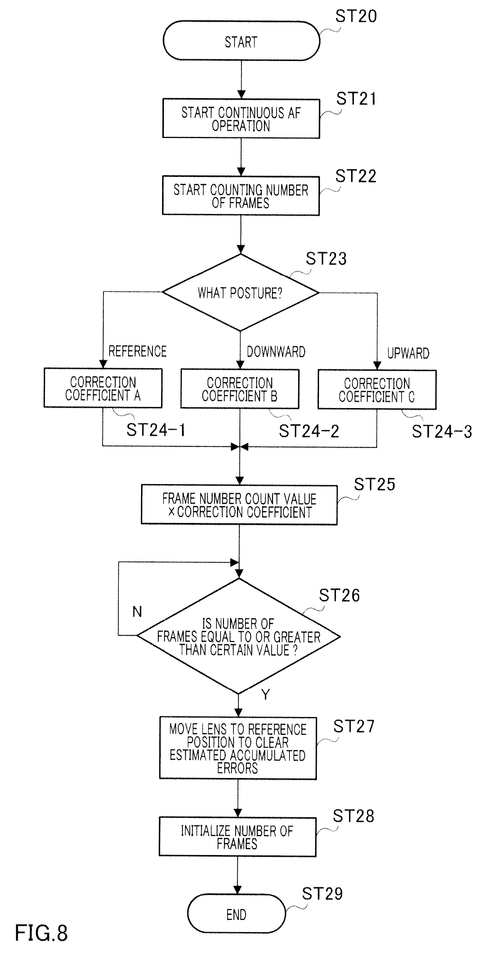

Next, an operation of the present embodiment is described by using FIG.8.

If the processing starts in step ST 20 (that is, if camera 200 is started), camera 200 starts a continuous AF operation in the next step ST 21. In the next step ST 22, counting of the number of captured image frames by counter 116 starts.

In step ST 23, the posture of camera 200 (mobile telephone) is detected by posture detection section 201. Thus, if the detected posture is the standard posture, correction calculation section 211 reads correction coefficient A in step ST 24-1, and corrects the number of captured image frames counted by counter 116 in step ST 25 by using correction coefficient A. Furthermore, if the detected posture is the downward posture, correction calculation section 211 reads correction coefficient B in step ST 24-2, and corrects the number of captured image frames counted by counter 116 in step ST 25 by using correction coefficient B. Furthermore, if the detected posture is the upward posture, correction calculation section 211 reads correction coefficient C in step ST 24-3, and corrects the number of captured image frames counted by counter 116 in step ST 25 by using correction coefficient C.

Note that the processing of steps ST 23 to ST 24 to ST 25 is desired to be performed while switching the correction coefficient whenever a change in a posture is detected during counting of the number of captured image frames.

In step ST 26, it is determined whether or not the number of captured image frames after correction matches or exceeds a certain value. Thus, if the number of captured image frames matches or exceeds a certain value, the processing moves to step ST 27, and AF driver 109 moves lens 101 to the reference position. Furthermore, camera 200 resets the estimated lens position calculated so far. Thus, the accumulated error of the estimated lens position is cleared.

Next, in step ST 28, the number of captured image frames counted by counter 116 is initialized (reset), and the processing is terminated in the next step ST 29. Thus, camera 200 corrects the count value of the number of captured image frames after the start of a continuous AF operation in accordance with the posture, and, if the count value after correction matches or exceeds a certain value, then camera 200 resets the position of lens 101 and the estimated position of lens 101.

Note that the example of FIG.8 illustrates a case in which the count value of the number of captured image frames after the start of a continuous AF operation is corrected in accordance with the posture, but of course, instead of the number of captured image frames, the count of AF operations or the time after the start of the continuous AF operation may also be corrected in accordance with the posture.

As described above, according to the present embodiment, in addition to Embodiment 1, by correcting the count of AF operations, the number of captured image frames, or the time after the start of a continuous AF operation in accordance with the posture of camera 200, in addition to the effect of Embodiment 1, lens 101 can be quickly reset to a reference position for the posture in which the estimated position of the kens is more susceptible to error, and therefore, an increase in accumulated error can be further suppressed.

Note that the present embodiment describes the correction of a count value in accordance with the posture, however, the same effect can be achieved even by changing the fixed value (threshold value) in step ST 26 in accordance with the posture.

### [Embodiment 3]

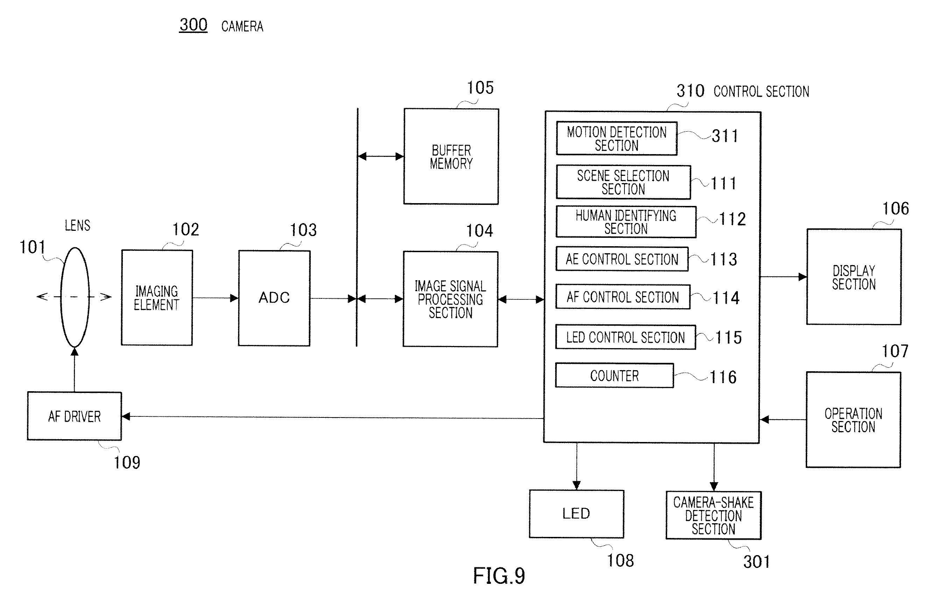

FIG.9, in which the parts corresponding to those in FIG.2 are denoted by the same reference numerals, shows the principle-part configuration of camera 300 of the present embodiment. In addition to the configuration of camera 100 (FIG.1), camera 300 of the present embodiment includes camera-shake detection section 301 and motion detection section 311. For example, camera-shake detection section 301 is configured by an acceleration sensor, which detects a camera shake in a portable terminal apparatus in which camera 300 is provided Motion detection section 311 detects an object shake based on the captured image.

Even when the count of AF operations, the number of captured image frames, or the time after the start of a continuous AF operation matches or exceeds a certain value, camera 300 of the present embodiment waits for lens 101 to move to a reference position until camera shake is detected by camera-shake detection section 301, or until object shake is detected by motion detection section 311, and camera 300 moves lens 101 to the reference position after detecting, as a trigger, camera shake or object shake.

Thus, the blur of a captured image owing to the movement of lens 101 to the reference position can be prevented. In other words, if lens 101 is moved immediately to a reference position when the count of AF operations, the number of captured image frames, or the time matches or exceeds a certain value, the captured images may become blurred due to the visibility of an AF operation in the captured images at each fixed period. In the present embodiment, because lens 101 is moved to the reference position by taking advantage of the blurring of a captured image, the AF operation does not occur easily in the captured image. As a result, the blur of captured images when moving lens 101 to the reference position can be prevented.

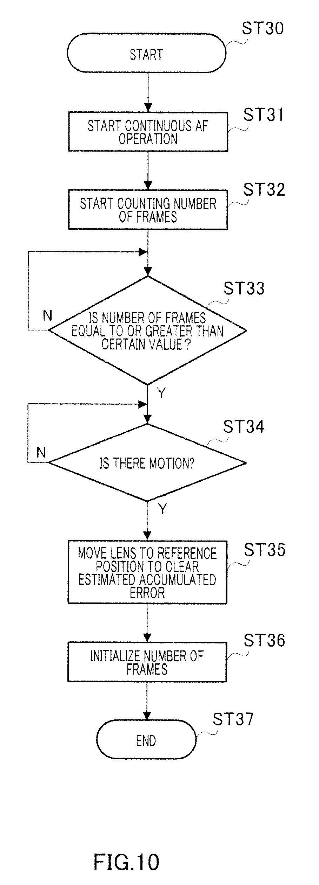

Next, an operation of the present embodiment is described by using FIG.10.

If the processing starts in step ST 30 (that is, if camera 300 is started), camera 300 starts a continuous AF operation in the next step ST 31. In the next step ST 32, counting of the number of captured image frames by counter 116 starts. In step ST 33, it is determined whether or not the number of captured image frames counted by counter 116 matches or exceeds a certain value. If the number of captured image frames matches or exceeds a certain value, the processing moves to step ST 34.

In step ST 34, the detection of camera shake by camera-shake detection section 301, or the detection of object shake by motion detection section 311 is awaited, and, if camera shake or object shake is detected, the processing moves to step ST 35,

In step ST 35, AF driver 109 moves lens 101 to a reference position. Furthermore, camera 300 resets the estimated lens position calculated so far. Thus, the accumulated error of the estimated lens position is cleared.

Next, in step ST 36, the number of captured image frames counted by counter 116 is initialized (reset), and the processing is terminated in the next step ST 37. Thus, until camera shake or object shake is detected, camera 300 waits for lens 101 to move to the reference position, and then resets the position of lens 101 and estimated position of lens 101 when camera shake or object shake is detected.

Note that the example of FIG.10 illustrates a case in which the number of captured image frames after the start of a continuous AF operation is counted, but of course, the count of AF operations or the time after the start of the continuous AF operation may also be counted.

As described above, according to the present embodiment, in addition to Embodiment 1, by waiting for lens 101 to move to a reference position until camera shake or object shake is detected, and then by resetting the position of lens 101 and the estimated position of lens 101 when camera shake or object shake is detected, in addition to the effect of Embodiment 1, the blur of a captured image that occurs by moving lens 101 to the reference position can be prevented.

Note that the present embodiment describes the inclusion of camera-shake detection section 301 and motion detection section 311, however, only either one of camera-shake detection section 301 or motion detection section 311 may be included, and lens 101 may be moved to a reference position by taking either one of camera shake or object shake occurs, as a trigger.

The disclosure of Japanese Patent Application No. 2009-114791, filed on May 11, 2009, including the specification, drawings and abstract, is incorporated herein by reference in its entirety.

### Industrial Applicability

The camera, portable terminal apparatus and lens position control method according to the present invention are suitable for use for cameras such as portable telephones with a camera. As a lens position control method, the present invention may be incorporated in various types of electronic apparatuses other than portable terminals.

### Reference Signs List

- 100, 200, 300: Camera
- 101: Lens
- 109: AF driver
- 110, 210, 310: Control section
- 111: Scene selection section
- 112: Human identifying section
- 113: AE control section
- 114: AF control section
- 115: LED control section
- 116: Counter
- 201: Posture detection section
- 211: Correction calculation section
- 301: Camera-shake detection section
- 311: Motion detection section

## Claims

1. A camera comprising:
an autofocus control section;
a lens position estimation section that estimates a position of a lens based on a control result in the autofocus control section; and
a lens drive section that moves the position of the lens to a reference position when a count of autofocus, a time, or a number of captured frames becomes equal to or greater than a threshold value.

2. The camera according to claim 1. further comprising a correction section that corrects the count of autofocus, the time, the number of captured frames or the threshold value based on the posture of the camera.

3. The camera according to claim 1, wherein the lens drive section moves the position of the lens to a reference position when the count of autofocus, the time, or the number of captured frames is equal to or greater than a threshold value and camera shake or object shake is detected.

4. The camera according to claim 1, wherein the reference position to move the lens is a mechanical endpoint.

5. The camera according to claim 1, wherein:
the autofocus control section performs a continuous autofocus of continuously performing autofocus; and
the lens drive section moves the position of the lens to a reference position when the count of autofocus, the time, or the number of captured frames is equal to or greater than a threshold value during the continuous autofocus.

6. The camera according to claim 1, further comprising a scene selection section, wherein a lens position estimation result obtained in the lens position estimation section is used in the scene selection section.

7. A portable terminal apparatus comprising the camera according to claim 1.

8. A lens position control method comprising:
a lens position estimation step of estimating a position of a lens based on a control result in the autofocus control section; and
a lens drive step of moving a position of the lens to a reference position when a count of autofocus, a time, or a number of captured frames is equal to or greater than a threshold value.
